Europäisches Patentamt

European Patent Office

Office européen des brevets

(19)

(11) EP 0 564 366 B1

## (12) FASCICULE DE BREVET EUROPEEN

(45) Date de publication et mention
de la délivrance du brevet:
**21.05.1997 Bulletin 1997/21**

(51) Int Cl.⁶: **G01L 1/24**, G01M 11/04

(21) Numéro de dépôt: **93400858.2**

(22) Date de dépôt: **02.04.1993**

(54) **Détecteur à fibre optique de contraintes**

Faseroptischer Belastungsdetektor

Fiber optic strain detector

(84) Etats contractants désignés:
**DE GB**

(30) Priorité: **02.04.1992 FR 9204000**

(43) Date de publication de la demande:
**06.10.1993 Bulletin 1993/40**

(73) Titulaire: **THOMSON-CSF**
**75008 Paris (FR)**

(72) Inventeurs:
• **Chazelas, Jean**
**F-92402 Courbevoie Cedex (FR)**
• **Turpin, Marc**
**F-92402 Courbevoie Cedex (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
EP-A- 0 326 309          EP-A- 0 381 309
EP-A- 0 404 242          EP-A- 0 434 504
DE-A- 3 638 583          US-A- 4 255 017

• **PATENT ABSTRACTS OF JAPAN, vol. 5, no. 110 (P-71)(782), 17 juillet 1981; & JP-A-56051636 (NIPPON DENSHIN DENWA KOSHA) 09.05.1981**
• **IEEE INSTRUMENTATION AND MEASUREMENT TECHNOLOGY CONFERENCE, vol. 90 CH, no. 2735, 13-15 février 1990, pages 334-338, San Jose, CA, US; H. VIFIAN: "Optical measurements based on rf modulation techniques"**
• **HEWLETT-PACKARD JOURNAL, vol. 42, no. 1, février 1991, pages 6-13, Palo Alto, CA, US; R.W. WONG et al.: "High-Speed Lightwave Component Analysis to 20 GHz"**
• **HEWLETT-PACKARD JOURNAL, vol. 42, no. 1, février 1991, pages 13-22, Palo Alto, CA, US; P.R. HERNDAY et al.: "Design of a 20-GHz Lightwave Component Analyzer"**
• **MESURES, no. 611, 9 octobre 1989, pages 37,38, Paris, FR; F.-X. DESFORGES: "Photonetics: le multiplexage temporel pour des détecteurs T.O.R."**
• **OPTICS COMMUNICATIONS, vol. 85, no. 5/6, 1 octobre 1991, pages 385-388, Amsterdam, NL; P.-Y. CHIEN et al.: "An optical signal generator based on a triangularly phase-modulated interferometer"**
• **ELEKTRONIK, vol. 40, no. 21, 15 octobre 1991, pages 126-129, 134-136; Munich, DE; R. SCHRÖDER: "LWL-Systemkomponenten auf dem Prüfstand"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un détecteur à fibre optique de contraintes et notamment un dispositif permettant de détecter les contraintes appliquées à une fibre optique. Ces contraintes peuvent être des contraintes d'allongement ou de compression selon l'axe de la fibre, des efforts de pression (chocs) perpendiculairement à l'axe de la fibre, des déformations (courbures), des variations de température ayant pour effet de faire varier l'indice de réfraction de la fibre.

Cette invention s'applique au contrôle d'endommagement de structures et en particulier de structures composites par des techniques non destructives. Elle est applicable par exemple, au contrôle d'ouvrages de génie civil (pont, barrages) ou au contrôle de déformations des structures d'aéronefs.

Le contrôle d'endommagement des structures composites peut être réalisé par l'insertion de capteurs à fibres optiques. Cette méthode est décrite dans la Demande de Brevet français n° 91 15347 (EP-A1-546 899 publication 16.6.93). Cette méthode est particulièrement bien adaptée au suivi de déformations ou à la détection de délaminage en fatigue.

Le contrôle d'endommagement de structures peut être réalisé en utilisant un report par collage sur la structure à contrôler d'un ensemble constitué d'un élément rigide et d'une fibre optique ainsi qu'il est décrit dans la Demande de Brevet français n° 92 03006 (FR-A1-2 688 584 publication 17.9.93). Tous ces systèmes ont en commun une méthode de mesure utilisant un interféromètre optique de type Michelson.

L'invention permet de s'affranchir de cette interférométrie optique par le transfert de la détection dans le domaine des hyperfréquences.

Parmi les nombreuses méthodes de mesures destinées aux caractérisations de réseaux de fibres optiques, on distingue deux catégories principales :

- la réflectométrie
- l'interféro-polarimétrie.

Les méthodes réflectométriques comportent les méthodes de mesures liées à la réflectométrie optique ou hyperfréquence, dans le domaine temporel ou dans le domaine fréquentiel et parmi ces méthodes de mesure, les plus connues sont :

- l'OTDR (Optical Time Domain Reflectometry)
- l'OFDR (Optical Frequency Domain Reflectometry) et ses dérivées en particulier les techniques de type à rampe de fréquences (FM-CW).

La réflectométrie est basée sur le principe du radar : une impulsion lumineuse est injectée dans la fibre optique, la lumière réfléchie (c'est-à-dire la lumière rétrodiffusée sur un défaut de la fibre ou sur un connecteur ou une épissure) est mesurée au moyen d'un détecteur. La localisation des défauts est obtenue en mesurant l'écart de temps entre le temps $T_0$ d'émission du signal et le temps $T_1$ du retour du signal après réflexion sur le défaut.

Le principal avantage de l'OTDR résidera dans sa relative simplicité et son fonctionnement sur tout type de fibre.

Les principaux inconvénients de cette méthode sont :

- la sensibilité de détection de défauts
- la résolution spatiale. En effet l'OTDR reste simple tant que l'on ne cherchera pas à avoir une trop grande résolution spatiale c'est-à-dire tant que la distance minimum entre deux défauts ne sera pas trop petite. Dans ce dernier cas, il faut disposer de sources laser très rapidement pulsées (de l'ordre de la picoseconde pour une résolution le long de la fibre de l'ordre du centimètre).

La réflectométrie dans le domaine fréquentiel (OFDR) utilise une technique très proche des méthodes d'analyse de réseau en hyperfréquence.

Dans cette technique, la porteuse optique est modulée en fréquence. On fait ensuite varier, par saut de fréquence, la modulation de la porteuse dans une gamme de fréquences la plus large possible. La réponse optique du système sous test est mesurée par détection hétérodyne fournissant l'amplitude et la phase pour chaque fréquence. La réponse dans le domaine temporel est obtenue après Transformée de Fourier Inverse.

Lorsque le système fonctionne en hyperfréquences, avec une large bande passante (plusieurs dizaines de GHz), la résolution spatiale obtenue est grande (des valeurs de l'ordre du mm ont été publiées).

La résolution spatiale est le principal avantage de cette technique.

Le domaine de la technique à rampe de fréquences comprend les applications des techniques radar à l'OFDR. Dans ces techniques, la source laser est modulée en fréquence. Une rampe de fréquence appliquée à la source laser permet de localiser les défauts d'une fibre optique en mesurant le retard entre l'émission et l'écho reçu par rétrodiffusion.

Ces techniques bénéficient d'une grande résolution spatiale mais nécessitent des méthodes complexes de modulation de fréquence de la source laser (en particulier dans le cas de lasers semiconducteurs).

Les méthodes interféro-polarimétriques sont basées sur l'interférométrie optique de type Michelson.

Cette méthode est décrite en particulier dans la Demande de Brevet n° 88 00780 (EP-A1-326 475).

Le principal avantage de cette méthode provient de la sensibilité de la fibre Fibre à structure évidée (FASE) en tant que capteur de pression ou de déformation et de l'utilisation de l'interférométrie.

Les principaux inconvénients sont :

- la résolution spatiale est limitée actuellement à une dizaine de centimètres
- sa difficulté d'implémentation dans un environnement sévère.

L'invention a pour objet un détecteur basé sur une technique différente et basé notamment sur des mesures de déphasages hyperfréquences.

L'invention concerne donc un détecteur à fibre optique de contraintes comprenant au moins une fibre optique et une source optique émettant dans la fibre optique un faisceau lumineux, caractérisé en ce qu'il comprend :

- un dispositif modulateur d'amplitude du faisceau lumineux commandé par au moins un signal électrique de fréquence de modulation ;
- un dispositif de détection connecté à la fibre traduisant le faisceau lumineux modulé, après qu'il soit passé par au moins une zone de la fibre, en signal électrique de mesure et mesurant le déphasage existant entre ce signal électrique de mesure et le signal électrique de fréquence de modulation ou un signal dérivé de ce signal électrique.

Les différents objets et caractéristiques de l'invention apparaîtront plus clairement dans la description qui va suivre et dans les figures annexées qui représentent :

- les figures 1a à 1c, un exemple de réalisation simplifié du dispositif de l'invention ;
- la figure 2, un exemple de réalisation détaillé du dispositif de l'invention ;
- la figure 3, une variante de réalisation du dispositif de la figure 2 ;
- la figure 4, un exemple de réalisation du dispositif de l'invention dans lequel la fibre est une fibre à maintien de polarisation ;
- les figures 5 et 6, des variantes de réalisation du dispositif de l'invention.

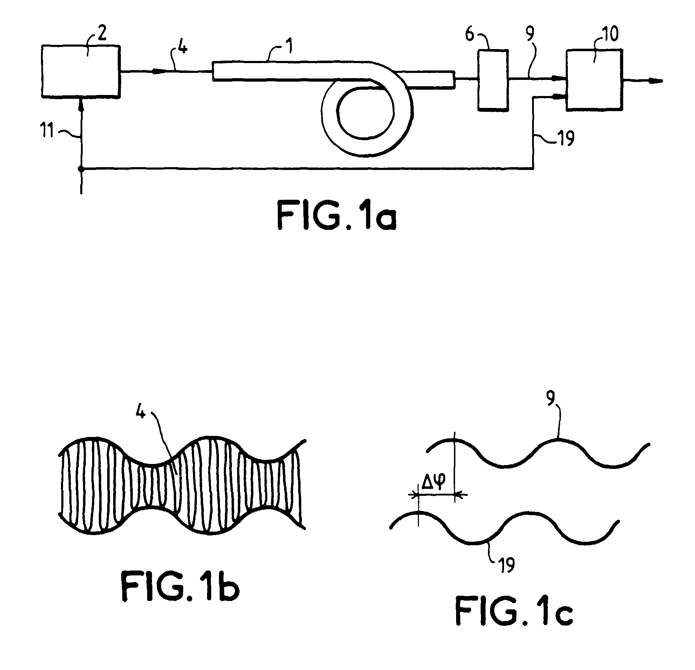

En se reportant aux figures 1a à 1c, on va tout d'abord décrire un exemple de réalisation simplifié de l'invention.

Le dispositif de la figure 1a comporte une fibre 1 qui reçoit d'une source optique 2 un faisceau lumineux 4.

Sous la commande d'un signal électrique alternatif 11, le faisceau lumineux 4 est modulé en amplitude. Le faisceau lumineux 4 est du type représenté en figure 1b. Le faisceau lumineux 4 est transmis par la fibre 1 à un dispositif de démodulation 6 qui fournit un signal démodulé tel que le signal 9 de la figure 1c.

Ce signal 9 est transmis à un dispositif de mesure de déphasage 10. Ce dispositif 10 reçoit également un signal 19 dérivé du signal électrique de modulation 11 et qui mesure le déphasage existant entre les signaux 9 et 19.

Le signal 19 peut être dérivé directement du signal 11 et être simplement soumis à un retard (par un dispositif non représenté) correspondant au temps de transmission du faisceau 4 et du signal 9. En l'absence de perturbation dans la fibre 1, les signaux 9 et 19 sont normalement en phase ou en une relation de phase déterminée et connue. Lorsque la fibre 1 subit une perturbation, le temps de transmission du faisceau lumineux 4 varie, les signaux 9 et 19 subissent une variation de déphasage ($\Delta_\varphi$ sur la figure 1c) et le dispositif 10 mesure ce déphasage.

La fréquence de modulation (fréquence du signal 11) peut selon l'utilisation du dispositif, avoir une valeur comprise par exemple entre 1 GHz et plusieurs dizaines de GHz.

Dans ce système, la source 2 peut être, par exemple, une diode laser modulée en amplitude par un signal hyperfréquence dont la fréquence sera choisie en fonction de la résolution spatiale désirée et de la précision de phase accessible par les mesures hyperfréquences.

Ce signal hyperfréquence sur porteuse optique est injecté dans la fibre optique qui peut être monomode ou à maintien de polarisation et qui joue le rôle de capteur intrinsèque.

L'application d'une contrainte ou d'une déformation sur la fibre optique crée une variation d'indice de réfraction du milieu se traduisant par un déphasage ou un retard du signal de mesure par rapport au signal de référence.

En sortie de la fibre, le faisceau 4 après détection démodulation donne un signal hyperfréquence 9.

Les deux signaux hyperfréquences 9 et 19 fournis sont amplifiés puis injectés dans un démodulateur amplitude-phase fournissant un signal (une tension) proportionnel au déphasage des deux signaux 9 et 19.

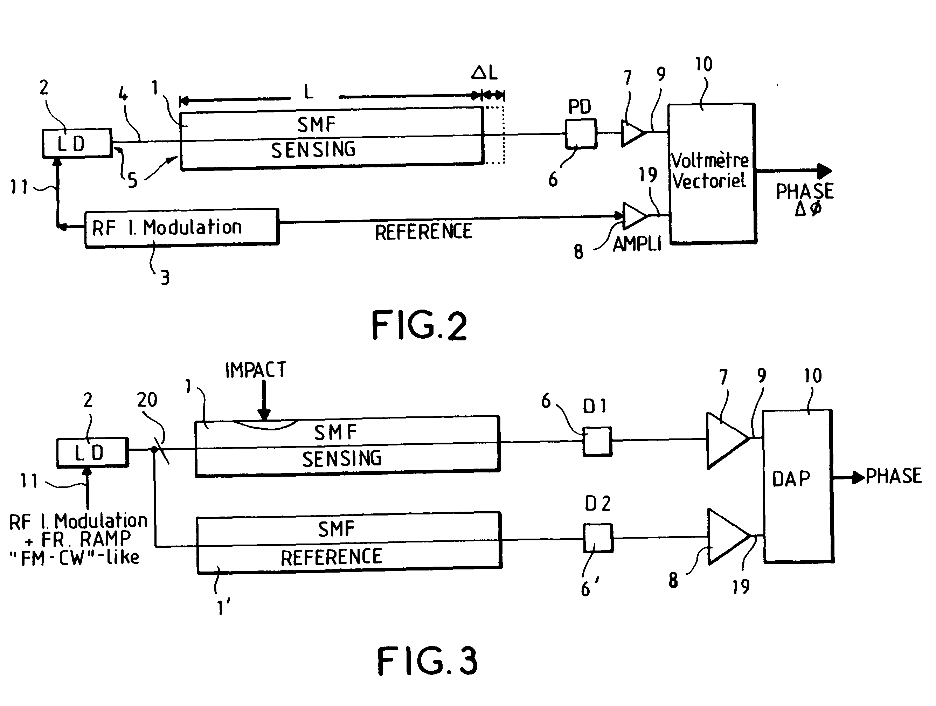

En se reportant à la figure 2, on va maintenant décrire un exemple de réalisation détaillé du dispositif de l'invention.

Une diode laser 2 est modulée en amplitude par un signal radiofréquence 11 dont la fréquence sera choisie en fonction de la résolution spatiale désirée et de la précision de phase accessible par les mesures hyperfréquences.

Ce signal hyperfréquence 11 sur porteuse optique 4 est injecté dans la fibre optique 1 jouant le rôle de capteur intrinsèque.

L'application d'une déformation telle que par exemple un allongement ou compression sur la fibre optique crée une variation d'indice de réfraction du milieu se traduisant par un déphasage du signal de mesure 9 par rapport au signal de référence 19.

En sortie de la fibre, le signal de mesure sera démodulé par un détecteur 6 ayant une bande passante compatible de la fréquence de modulation de la diode laser de source 2. Le signal démodulé et le signal de référence de modulation sont amplifiés par des amplificateurs 7 et 8.

La comparaison du signal de référence 19 et du signal de mesure 9 par le dispositif 10 fournit une mesure de déphasage proportionnel à l'allongement ou à la compression de la fibre optique de mesure.

Ce déphasage est du type :

$$\Delta\ \Phi = \frac{2\pi}{\lambda}\Delta(n.L)$$

$$= \frac{2\pi}{\lambda}(\Delta n.L + n\Delta L)$$

où

n = indice de la fibre
L = longueur de la fibre

Le dispositif de la figure 3 est une variante de celui de la figure 2. Il est utilisé ici par exemple pour détecter une contrainte localisée tel qu'un impact(choc par exemple).

Ce dispositif comporte une fibre de mesure 1 et une fibre de référence 1' non soumise à des contraintes. La source 2 fournit un faisceau lumineux modulé tel que précédemment à un séparateur de faisceau 20 qui divise le faisceau en deux parties vers les deux fibres 1 et 1'.

Des détecteurs 6 et 6' démodulent les faisceaux transmis par les fibres. Les signaux démodulés puis amplifiés par les amplificateurs 7 et 8 sont transmis à un dispositif de mesure de déphasage 10.

Si la fibre de mesure 1 est soumise à une contrainte, celle-ci est détectée par la mesure de déphasage.

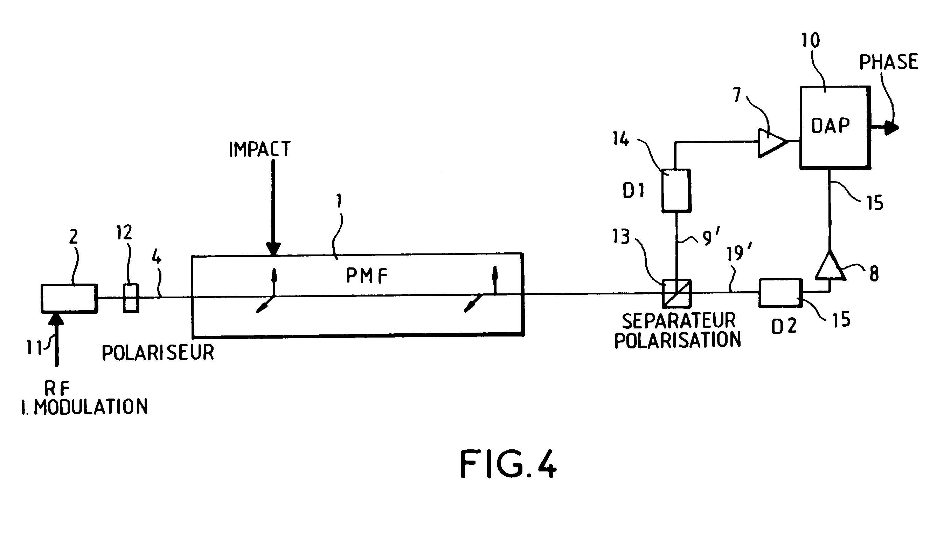

La méthode de mesure réalisée par le dispositif de la figure 4 est basée sur la mesure du déphasage (ou du retard) entre deux signaux hyperfréquences transmis sur un seul canal optique.

Le dispositif de la figure 4 comporte principalement une fibre optique 1 à maintien de polarisation recevant un faisceau lumineux 4 polarisé par un polariseur 12.

La diode laser 2 est modulée en amplitude par un signal alternatif 11 (par exemple radiofréquence) dont la fréquence sera choisie en fonction de la résolution spatiale désirée et de la précision de phase accessible par les mesures hyperfréquences.

Le signal alternatif 11 sur porteuse optique est injecté dans la fibre optique 1 à maintien de polarisation jouant le rôle de capteur intrinsèque (une fibre à structure évidée FASE, par exemple). Cette fibre possède deux modes de propagation orthogonaux (un axe lent et un axe rapide).

Les contraintes provoquées par un défaut, par un choc ou par un impact sur la structure à contrôler induisent un pincement local de la fibre optique. Cette contrainte sur la fibre se traduit par un point de couplage c'est-à-dire un transfert d'énergie d'un mode de polarisation sur l'autre.

Un des modes de polarisation servira de voie de référence (l'axe rapide par exemple), un point de couplage induira un transfert d'énergie sur le deuxième mode (l'axe lent). Les deux signaux arriveront avec un retard proportionnel à la différence de vitesse de propagation entre l'axe lent et l'axe rapide et proportionnel à la longueur de la fibre traversée après le point de couplage.

En sortie de la fibre, après passage dans un séparateur de polarisation 13, les deux signaux 9'et 19', sont démodulés par les détecteurs 14 et 15 ayant une bande passante compatible de la fréquence de modulation de la diode laser de source 2.

Les deux signaux hyperfréquences fournis par les deux détecteurs 14 et 15 sont amplifiés (amplificateurs 7 et 8) puis injectés dans un démodulateur amplitude-phase 10 fournissant un signal (une tension) proportionnel au déphasage des deux voies.

La valeur du déphasage mesurée par le dispositif 10 traduit la distance séparant le point d'impact de la perturbation et la sortie de la fibre 1. Ce déphasage permet donc de localiser la position du point d'impact sur la fibre.

L'intensité du signal résultant du transfert d'énergie au point d'impact (point de couplage) donne une indication sur l'intensité du couplage donc sur l'intensité de l'impact. Un dispositif de mesure 15 de l'intensité du signal résultant du transfert d'énergie indique la valeur de l'impact.

Selon une variante de réalisation, le signal de modulation 11 comporte une succession de fréquences de modulation successives. Selon un mode de réalisation préféré ces fréquences se présentent sous forme d'alternances de différentes fréquences soit continûment variables soit variables par pas successifs. De cette façon, plusieurs impacts pourront être détectés simultanément sur la fibre 1 par identification de la fréquence ayant donné lieu à un transfert d'énergie.

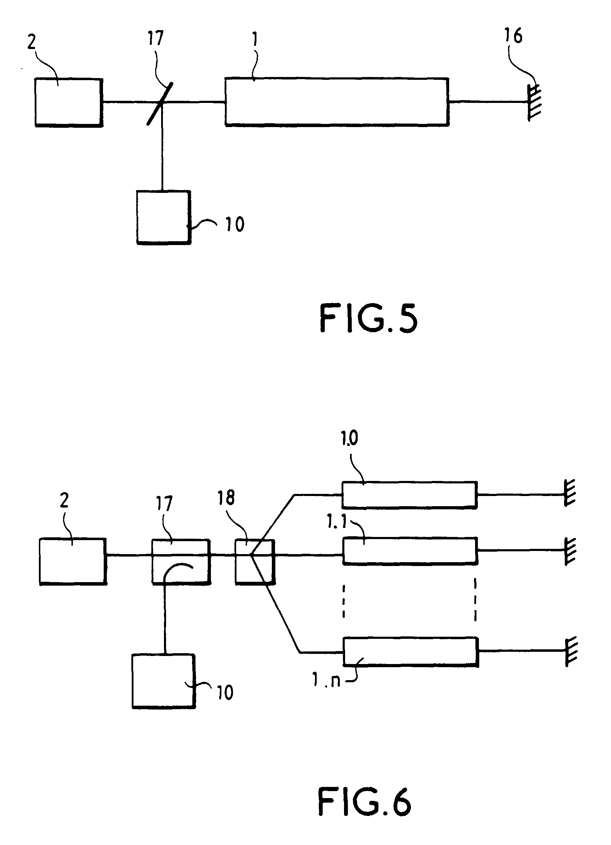

Les différents dispositifs décrits dans ce qui précède fonctionnent avec un seul passage du faisceau lumineux 4 dans la fibre 1. Selon une variante (voir figure 5) on prévoit en sortie de la fibre 1, un dispositif de réflexion 16 tel que la lumière après avoir parcouru la fibre 1 est réfléchie et parcourt la fibre en sens inverse. Un dispositif semi-réfléchissant 17 réfléchit au moins une partie de la lumière provenant de la fibre vers les dispositifs de détection et notamment le dispositif de mesure de déphasage 10. Une telle disposition appliquée notamment au dispositif de la figure 2 permet de doubler l'effet de retard de la contrainte appliquée à la fibre et de faciliter la détection de cette contrainte.

Sur la figure 5, le dispositif 17 est un dispositif semi-réfléchissant, mais il pourrait être un dispositif de couplage réalisé en optique intégré permettant de transmettre la lumière provenant de la fibre vers le dispositif 10.

La figure 6 représente une variante du dispositif de l'invention selon laquelle la source optique 2 transmet un faisceau modulé qui est réparti vers plusieurs fibres de mesure 1.0 à 1.n par un séparateur de faisceau 18. Selon l'application de la variante de la figure 4, des dispositifs de réflexion renvoient la lumière transmise par les différentes fibres vers un coupleur 17 qui retransmet la lumière réfléchie vers le dispositif de mesure 10.

Le dispositif de la figure 6 permet donc d'intégrer les effets de plusieurs contraintes affectant simultanément plusieurs fibres de mesure.

Ces exemples de réalisation de l'invention permettent ainsi de transférer les mesures d'interférences en longueurs d'onde optique à des mesures d'interférences en hyperfréquences. Ces dispositifs permettent en conséquence de s'affranchir de l'utilisation d'un interféromètre de Michelson. Il n'est plus utile de mesurer des retards optiques mais plutôt de mesurer des déphasages en hyperfréquences.

Cela se traduit par une simplification du système de lecture au profit de systèmes en électroniques hyperfréquences intégrés.

De plus, l'électronique intégrée qui peut être utilisée dans le système de lecture autorise une utilisation en vol du contrôle d'endommagement, ce qui peut être important pour les applications aéroportées.

D'autre part ce système fournit une information en "temps réel" de la structure contrôlée.

Il existe deux grands types d'applications de l'invention :

- Les mesures d'allongement ou de compression

Dans le cas d'une mesure d'allongement ou de compression, les dispositifs décrits ne nécessitent pas de fibre spécifique mais peuvent fonctionner avec des fibres monomodes classiques.

Pour des applications au contrôle d'endommagement de structures, cette mesure trouvera son application dans les structures soumises à des contraintes, des déformations ou des chocs telles que par exemple les ouvrages d'art, les structures aéroportées ou les cuves de stockage. Ces mesures s'étendent au cas de fissures dans les constructions (bâtiment, immeuble, ...).

- Les mesures de contraintes, déformations ou de chocs

Ces mesures nécessitent pour sa sensibilité aux mesurandes pré-citées, une fibre à maintien de polarisation par exemple de type fibre à structure évidée pour les mesures de contraintes, déformations ou chocs.

Les applications au contrôle d'endommagement de structures seront :

- Mesures de contraintes dans les structures béton
- Mesures de déformations thermo-mécaniques. Cette mesure nécessite la réalisation d'un capteur à deux fibres, l'une sensible à la température, l'autre sensible aux contraintes mécaniques.
- Mesures de sensibilité aux chocs ou aux impacts par la réalisation d'un capteur d'impact rapporté à une structure quelle que soit sa forme (ruban souple intelligent).

Il est bien évident que la description qui précède n'a été faite qu'à titre d'exemple et que d'autres variantes peuvent être envisagées.

**Revendications**

1. Détecteur à fibre optique de contraintes comprenant au moins une fibre optique (1) et une source optique (2) émettant dans la fibre optique un faisceau lumineux (4), caractérisé en ce qu'il comprend :

   - un dispositif modulateur d'amplitude (3) du faisceau lumineux (4) commandé par au moins un signal électrique de fréquence de modulation (11) ;
   - un dispositif de détection connecté à la fibre traduisant le faisceau lumineux modulé, après qu'il soit passé par au moins une zone de la fibre, en un signal électrique de mesure et mesurant le déphasage existant entre ce signal électrique de mesure et le signal électrique de fréquence de modulation (11) ou un signal dérivé de ce signal électrique.

2. Détecteur à fibre optique selon la revendication 1, caractérisé en ce que :

   - le dispositif de détection comporte un premier dispositif de détection optique et un démodulateur d'amplitude (6) détectant le faisceau modulé et fournissant un signal électrique démodulé (9) ;

   et en ce qu'il comporte

   - un dispositif de mesure de déphasage (10) recevant le signal électrique démodulé (9) et le signal électrique de fréquence (11) ou un signal électrique (19) dérivé de ce signal électrique (11) et fournissant un signal de déphasage.

3. Détecteur à fibre optique selon la revendication 1, caractérisé en ce que le signal électrique de fréquence est un signal radio-fréquence ou hyperfréquence.

4. Détecteur à fibre optique selon la revendication 2, caractérisé en ce que la fibre optique (1) est une fibre monomode.

5. Détecteur à fibre optique selon la revendication 2, caractérisé en ce qu'il comporte un séparateur de faisceau (20) dérivant une partie du faisceau modulé (4) vers une fibre de référence (1') non soumise à contrainte, un deuxième dispositif de détection et démodulateur d'amplitude (6') connecté à la fibre de référence (1') et fournissant un signal de référence démodulé (19) au dispositif de mesure de déphasage (10) à la place du signal électrique de fréquence (11).

6. Détecteur à fibre optique selon la revendication 1, caractérisé en ce que la fibre optique (1) est une fibre optique à maintien de polarisation et qu'il comporte un polariseur (12) à l'entrée de la fibre optique (1) ainsi qu'un séparateur de polarisation (13) à la sortie de la fibre optique (1), chaque polarisation étant démodulée par des démodulateurs (14 et 15) et transmises au dispositif de mesure de déphasage (10).

7. Détecteur à fibre optique selon la revendication 1, caractérisé en ce qu'il comporte en sortie de la fibre de mesure (1) un dispositif de réflexion renvoyant la lumière dans la fibre et un séparateur de faisceau (17) situé à l'entrée de la fibre de mesure (1) et transmettant au moins une partie de la lumière provenant de la fibre (1) vers le dispositif de mesure de déphasage (10).

8. Détecteur à fibre optique selon la revendication 7, caractérisé en ce qu'il comporte plusieurs fibres optiques de mesure (1.0 à 1.n) recevant, de la source optique (2), chacune par un répartiteur de faisceau (18), un faisceau modulé, chaque fibre ayant en sortie de fibre un dispositif de réflexion, le séparateur de faisceau (17) transmettant la lumière provenant des différentes fibres vers le dispositif de mesure de déphasage (10).

**Patentansprüche**

1. Lichtleitfaser-Detektor von Beanspruchungen, mit wenigstens einer Lichtleitfaser (1) und einer Lichtquelle (2), die in die Lichtleitfaser ein Lichtstrahlenbündel (4) sendet, dadurch gekennzeichnet, daß er enthält:

 - eine Vorrichtung (3) zur Amplitudenmodulation des Lichtstrahlenbündels (4), die durch wenigstens ein elektrisches Modulationsfrequenzsignal (11) gesteuert wird;
 - eine Erfassungsvorrichtung, die mit der Faser verbunden ist und das modulierte Lichtstrahlenbündel, nach dem es wenigstens durch eine Zone der Faser gelaufen ist, in ein elektrisches Meßsignal umwandelt und die Phasenverschiebung mißt, die zwischen diesem elektrischen Meßsignal und dem elektrischen Modulationsfrequenzsignal (11) oder einem aus diesem elektrischen Signal abgeleiteten Signal vorhanden ist.

2. Lichtleitfaser-Detektor nach Anspruch 1, dadurch gekennzeichnet, daß:

 - die Erfassungsvorrichtung eine erste optische Erfassungsvorrichtung und einen Amplitudendemodulator (6) enthält, die das modulierte Strahlenbündel erfassen und ein demoduliertes elektrisches Signal (9) liefern;

 und dadurch, daß er enthält:

 - eine Phasenverschiebungs-Meßvorrichtung (10), die das demodulierte elektrische Signal (9) und das elektrische Frequenzsignal (11) oder ein aus diesem elektrischen Signal (11) abgeleitetes elektrisches Signal (19) empfängt und ein Phasenverschiebungssignal liefert.

3. Lichtleitfaser-Detektor nach Anspruch 1, dadurch gekennzeichnet, daß das elektrische Frequenzsignal ein Hochfrequenz- oder Höchstfrequenzsignal ist.

4. Lichtleitfaser-Detektor nach Anspruch 2, dadurch gekennzeichnet, daß die Lichtleitfaser (1) eine Einmodenfaser ist.

5. Lichtleitfaser-Detektor nach Anspruch 2, dadurch gekennzeichnet, daß er einen Strahlteiler (20), der einen Teil des modulierten Strahlenbündels (4) an eine keiner Beanspruchung unterliegende Referenzfaser (1') umleitet, und eine zweite Erfassungs- und Amplitudendemodulationsvorrichtung (6') enthält, die mit der Referenzfaser (1') verbunden ist und zur Phasenverschiebungs-Meßvorrichtung (10) statt des elektrischen Frequenzsignals (11) ein demoduliertes Referenzsignal (19) liefert.

6. Lichtleitfaser-Detektor nach Anspruch 1, dadurch gekennzeichnet, daß die Lichtleitfaser (1) eine Lichtleitfaser mit Polarisationserhaltung ist und daß er am Eingang der Lichtleitfaser (1) einen Polarisator (12) und am Ausgang der Lichtleitfaser (1) einen Polarisationsteiler (13) enthält, wobei jede Polarisation durch Demodulatoren (14 und 15) demoduliert wird und an die Phasenverschiebungs-Meßvorrichtung (10) übertragen wird.

7. Lichtleitfaser-Detektor nach Anspruch 1, dadurch gekennzeichnet, daß er am Ausgang der Meßfaser (1) eine Reflektionsvorrichtung, die das Licht in die Faser zurückschickt, und ferner einen Strahlteiler (17) enthält, der sich am Eingang der Meßfaser (1) befindet und wenigstens einen Teil des von der Faser (1) kommenden Lichts an die Phasenverschiebungs-Meßvorrichtung (10) überträgt.

8. Lichtleitfaser-Detektor nach Anspruch 7, dadurch gekennzeichnet, daß er mehrere Meß-Lichtleitfasern (1.0 bis 1.n) enthält, die von der Lichtquelle (2) über einen Strahlenbündelverteiler (18) jeweils ein moduliertes Strahlenbündel empfangen, wobei jede Faser am Faserausgang eine Reflektions-vorrichtung enthält, wobei der Strahlteiler (17) das von den verschiedenen Fasern kommende Licht an die Phasenverschiebungs-Meßvorrichtung (10) überträgt.

**Claims**

1. Fibre optic strain detector comprising at least one optical fibre (1) and an optical source (2) emitting a light beam (4) into the optical fibre, characterized in that it comprises:

   - a device (3) for amplitude modulating the light beam (4) controlled by at least one modulation frequency electrical signal (11);
   - a detection device connected to the fibre translating the modulated light beam, after it has passed through at least one zone of the fibre, into a measurement electrical signal and measuring the phase shift existing between this measurement electrical signal and the modulation frequency electrical signal (11) or a signal derived from this electrical signal.

2. Fibre optic detector according to Claim 1, characterized in that:

   - the detection device includes a first optical detection device and an amplitude demodulator (6) detecting the modulated beam and delivering a demodulated electrical signal (9);

   and in that it includes

   - a phase-shift measurement device (10) receiving the demodulated electrical signal (9) and the frequency electrical signal (11) or an electrical signal (19) derived from this electrical signal (11) and delivering a phase-shift signal.

3. Fibre optic detector according to Claim 1, characterized in that the frequency electrical signal is a radio-frequency or UHF frequency signal.

4. Fibre optic detector according to Claim 2, characterized in that the optical fibre (1) is a monomode fibre.

5. Fibre optic detector according to Claim 2, characterized in that it includes a beam separator (20) diverting part of the modulated beam (4) towards a reference fibre (1') which is not subjected to strain, a se.cond detection and amplitude demodulator device (6') connected to the reference fibre (1') and delivering a demodulated reference signal (19) to the phase-shift measurement device (10) in place of the frequency electrical signal (11).

6. Fibre optic detector according to Claim 1, characterized in that the optical fibre (1) is a polarisation-maintaining optical fibre and that it includes a polariser (12) at the input of the optical fibre (1) as well as a polarisation separator (13) at the output of the optical fibre (1), each polarisation being demodulated by demodulators (14 and 15) and transmitted to the phase-shift measurement device (10).

7. Fibre optic detector according to Claim 1, characterized in that it includes at the output of the measurement fibre (1) a reflection device returning the light to the fibre and a beam separator (17) situated at the input of the measurement fibre (1) and transmitting at least part of the light originating from the fibre (1) to the phase-shift measurement device (10).

8. Fibre optic detector according to Claim 7, characterized in that it includes several measurement optical fibres (1.0 to 1.n) receiving, from the optical source (2), each via a beam distributor (18), a modulated beam, each fibre having at the fibre output a reflection device, the beam separator (17) transmitting the light originating from the various fibres to the phase-shift measurement device (10).

FIG.1a

FIG.1b

FIG.1c

EP 0 564 366 B1

FIG.2

FIG.3

FIG.4

PHASE

DAP 10

15

8

D2 15

7

9'

19'

D1

14

13

SEPARATEUR POLARISATION

PMF

1

IMPACT

4

POLARISEUR

12

2

RF
I.MODULATION

11

FIG.5

FIG.6